Europäisches Patentamt

European Patent Office

Office européen des brevets

(19)

(11) Veröffentlichungsnummer: **0 158 050**
**B1**

(12) # EUROPÄISCHE PATENTSCHRIFT

(45) Veröffentlichungstag der Patentschrift:
22.03.89

(51) Int. Cl.⁴: **G 01 D 11/24, F 16 J 15/00**

(21) Anmeldenummer: **85101737.6**

(22) Anmeldetag: **16.02.85**

(54) **Gekapselte Messeinrichtung.**

(30) Priorität: **24.03.84 DE 3410944**

(43) Veröffentlichungstag der Anmeldung:
**16.10.85 Patentblatt 85/42**

(45) Bekanntmachung des Hinweises auf die Patenterteilung:
**22.03.89 Patentblatt 89/12**

(84) Benannte Vertragsstaaten:
**AT CH DE FR GB IT LI NL SE**

(56) Entgegenhaltungen:
**DE-C- 2 241 371**
**DE-C- 2 623 526**

**Schmid, Edgar, Handbuch der Dichtungstechnik, S. 194, f (Grafenau 1981)**

**Die Akte enthält technische Angaben, die nach dem Eingang der Anmeldung eingereicht wurden und die nicht in dieser Patentschrift enthalten sind.**

(73) Patentinhaber: **Dr. Johannes Heidenhain GmbH, Nansenstrasse 17, D-8225 Traunreut (DE)**

(72) Erfinder: **Miller, Walter, Dr., Adalbert-Stifter-Strasse 19, D-8220 Traunstein (DE)**
Erfinder: **Kraus, Heinz, Traunring 74e, D-8225 Traunreut (DE)**

## Beschreibung

Die Erfindung bezieht sich auf eine gekapselte Meßeinrichtung nach dem Oberbegriff des Anspruchs 1,

In der DE-C2-24 21 371 ist eine gekapselte Meßeinrichtung gezeigt, bei der die Abdichtung eines Hohlkörpers durch elastische, dachförmig angeordnete Dichtlippen erfolgt. Zur Verbesserung der Abdichtung befindet sich im Raum um die Dichtlippen eine Dichtungsflüssigkeit.

Abgedichtete Meßeinrichtungen sind darüber hinaus in großer Anzahl bekannt. Als weiteres Beispiel sei auf eine Längenmeßeinrichtung verwiesen, wie sie in der DE-C2-26 23 526 beschrieben ist.

Die dachförmig angeordneten Dichtlippen sind aus elastischem Kunststoff und schmiegen sich dichtend aneinander, wobei im Bereich des Mitnehmers die Dichtlippen entsprechend der Mitnehmerdicke örtlich aufgespreizt werden. Die Abdichtung der Meßeinrichtungen erfolgt, damit schädliche Umgebungseinflüsse nicht die im Innern des Gehäuses angeordneten Bauteile der Meßeinrichtung in ihrer Funktion und/oder Lebensdauer beeinträchtigen.

Bei Werkzeugmaschinen, die mit derartigen Meßeinrichtungen ausgerüstet sind, werden Kühl- und Schmiermittel verwendet, die durch die Dichtlippen vom Innern der Meßeinrichtung ferngehalten werden. Diese Flüssigkeiten greifen jedoch das Material der Dichtlippen an und bringen die Dichtlippen zum Quellen, so daß sich deren Länge ändert. Es kommt auch vor, daß sich wegen der aggressiven Medien die Gleiteigenschaften der Dichtlippen negativ verändern.

Wenn nun durch die aggressiven Flüssigkeiten an den Werkzeugmaschinen die Dichtlippen quellen, legen sie sich in Wellenform und die Dichtungseigenschaften verschlechtern sich, oder die Oberfläche wird derart angegriffen, daß die Reibung zwischen Dichtlippen und Mitnehmer unzulässig hoch wird.

In dem «Handbuch der Dichtungstechnik» v. Edgar Schmid, Grafenau, 1981 sind auf den Seiten 194 und 195 mehrteilige Dichtungen für hohe Druckbelastungen beschrieben. Die Stützprofile sind wegen dieser hohen Druckbelastungen im Verhältnis zu den Dichtprofilen steif. Derartige Dichtungen scheiden wegen mangelnder Elastizität und aus Reibungsgründen für den Einsatz in den gattungsgemäßen Meßeinrichtungen aus.

Der Erfindung liegt die Aufgabe zugrunde, eine gekapselte Meßeinrichtung zu schaffen, deren elastische Abdeckelemente auch nach längerem Einsatz unter aggressiven Umgebungseinflüssen ihre Dichungseigenschaften nicht verlieren, so daß ein einwandfreier Langzeitbetrieb erreicht werden kann.

Diese Aufgabe wird durch die im Kennzeichen des Anspruches 1 angegebenen Maßnahmen gelöst.

Die Vorteile der erfindungsgemäßen Meßeinrichtung liegen in der guten Abdichtung des Hohlraumes des Gehäuses, die auch dann erhalten bleibt, falls die Dichtelemente mit aggressiven Mitteln in Berührung gekommen sind. Die Dichtungseigenschaften bleiben erhalten, da durch die erfindungsgemäße Ausgestaltung der mehrteiligen Dichtelemente auch eine Funktionsaufteilung der Dichtelemente erzielt wird. Das eigentliche Dichtprofil weist im Zusammenwirken mit dem Mitnehmer eine geringe Reibung und eine hohe Abreibfestigkeit auf. Die erforderliche Dauerelastizität für die Rückstellkräfte und die Formstabilität werden von den elastischen Stützprofilen aufgebracht.

In den abhängigen Ansprüchen werden vorteilhafte Ausgestaltungen der Erfindung angegeben.

Mit Hilfe von Ausführungsbeispielen soll die Erfindung anhand der Zeichnung noch näher erläutert werden.

Es zeigen

Figur 1 eine schematisch dargestellte Meßeinrichtung im Querschnitt,

Figur 2 eine Meßeinrichtung gemäß Figur 1 mit geschnittenem Mitnehmer,

Figur 3 eine Meßeinrichtung mit Dichtungsschläuchen im Querschnitt und

Figur 4 eine Variante der Meßeinrichtung gemäß Figur 1.

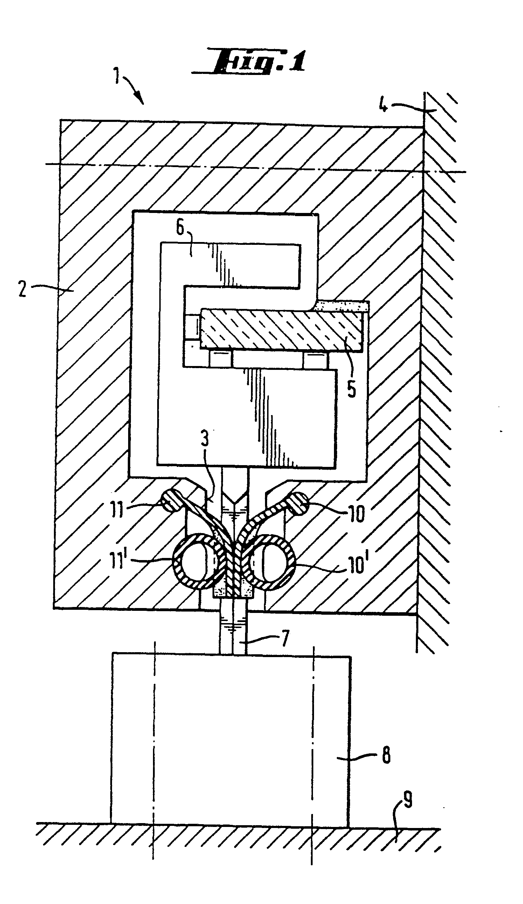

Der Schnitt durch eine gekapselte Meßeinrichtung 1 zeigt gemäß Figur 1 ein an den Stirnseiten geschlossenes Gehäuse 2, das an einer Seite einen Längsschlitz 3 aufweist. Das Gehäuse 2 ist mit dem Längsschlitz 3 nach unten am Tisch 4 einer nicht näher bezeichneten Werkzeugmaschine befestigt.

Im Innern des Gehäuses 2 ist ein Maßstab 5 angebracht, der eine nicht näher bezeichnete Meßteilung aufweist. Der Maßstab 5 wird in bekannter Weise von einem Meßaufnehmer abgelesen, der als Abtastbaueinheit 6 bezeichnet wird, und der im Innern des Gehäuses 2 längs des Maßstabs 5 verschiebbar ist. Ein an der Abtastbaueinheit 6 angebrachter sogenannter Mitnehmer 7, der den Querschnitt eines zweiseitigen Schwertes aufweist, ragt aus dem Längsschlitz 3 heraus und ist an seinem freien Ende mit einem Montagefuß 8 verbunden. Durch den Montagefuß 8 ist die Abtastbaueinheit 6 am Bett 9 der Werkzeugmaschine befestigt.

Wenn nun der Maschinenschlitten 4 verfahren wird, bewegt sich der Maßstab 5 an der Abtastbaueinheit 6 entlang, so daß der Verfahrweg zwischen Bett 9 und Schlitten 4 ermittelt wird, und als Meßwert angezeigt werden kann.

An Werkzeugmaschinen wird zur Erhöhung der Schnittleistung der spanenden Werkzeuge mit Kühl- und/oder Schmiermitteln gearbeitet, um zu besseren Arbeitsergebnissen zu gelangen.

Diese Medien sind auf ihren Zweck als Kühl- oder Schmiermittel konzipiert und greifen Maschinenelemente an. Meßeinrichtungen 1 der eingangs genannten Art sind hochpräzise optische und elektronische Instrumente, die vor derartig aggressiven Medien geschützt werden müssen. Aus diesem Grund ist der unterseitige Längsschlitz 3 durch mehrteilige Abdeckelemente 10, 10', 11, 11' abgedichtet.

Herkömmliche, dachförmig angeordnete Abdeckelemente verlieren – wie bereits eingangs erwähnt – jedoch unter dem Einfluß der aggressiven Medien ihre ursprünglichen Eigenschaften.

Hier schafft die Erfindung Abhilfe, indem die für dichtende Abdeckelemente geforderten, sich zum Teil widersprechenden Funktionen auf mehrere einzelne Abdeckelemententeile aufgeteilt werden, von denen jedes seine Funktionen optimaler erfüllen kann, als ein einzelnes Abdeckelement, bei dem Funktionskompromisse gemacht werden müssen.

Diese Anforderung an die Funktionen sind:

1. geringe Reibung und Abriebfestigkeit für das Zusammenwirken von Dichtelement und Mitnehmer;

2. Dauerelastizität und Formstabilität zur Gewährleistung der sicheren Schließung der Abdeckelemente 10, 10', 11, 11' über dem Längsschlitz 3.

Bei den zweiteiligen Abdeckelementen 10, 10', 11, 11' in Figur 1 besteht das eigentliche Dichtprofil aus einer Lamelle 10, 11 pro Seite des Längsschlitzes 3. Sie sind z.B. aus Polytetrafluoräthylen als Strang hergestellt und müssen nur auf das passende Maß abgelängt und in das Gehäuse 1 eingezogen werden.

Da diese Dichtlamellen 10, 11 keine ausreichende Formstabilität und keine Dauerelastizität aufweisen, werden sie jeweils von einem als Schlauch 10', 11' ausgebildeten Profil gestützt. Die Schläuche 10', 11' bringen die erforderliche Dauerelastizität und Formstabilität auf, um die eigentlichen Dichtlamellen 10 und 11 dauerhaft in dichtender Berührung zu halten. Die Dichtlamellen 10, 11 sind resistent gegen die aggressiven Medien an den Maschinen, und es ist vollkommen belanglos für die Dichteigenschaften, wenn sich die Stützprofile in Form der Schläuche 10' und 11' unter dem Einfluß dieser aggressiven Medien verändern, d.h. quellen oder ihre Oberflächenqualität verringern. Die Stützprofile 10', 11' sind aus synthetischem Kautschuk hergestellt, oder als Silikonschläuche ausgeführt. Die Schläuche 10', 11' sind aufblasbar, so daß sich die gewünschte Elastizität einstellen läßt.

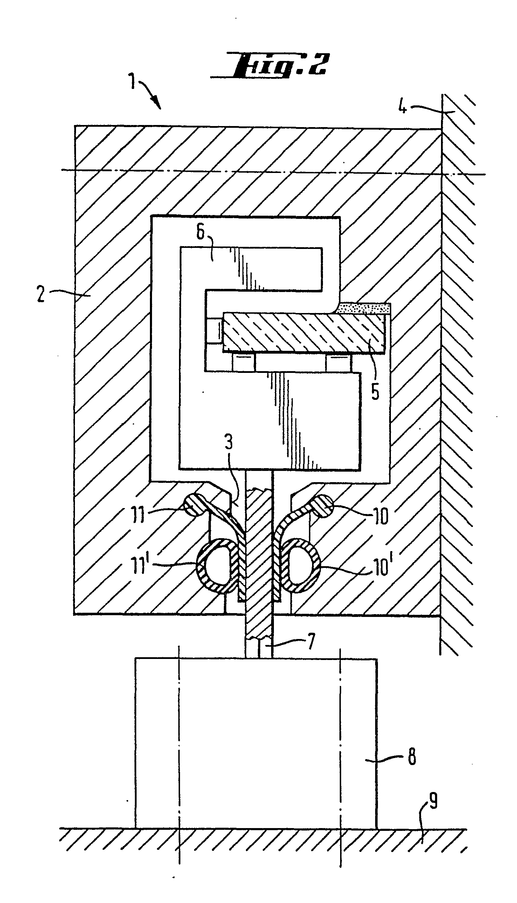

In Figur 2 ist dieselbe Meßeinrichtung 1 gezeigt, wie in Figur 1, jedoch ist hier der Schnitt an einem Ort gelegt, an dem sich gerade die Abtastbaueinheit 6 befindet. Der Mitnehmer 7 durchdringt die Abdeckelemente 10, 10', 11, 11' und spreizt sie örtlich auseinander. Dabei verformen sich die Schläuche 10', 11'. Da die weiteren Bauelemente mit denen der Figur 1 identisch sind, brauchen sie hier nicht mehr erläutert zu werden.

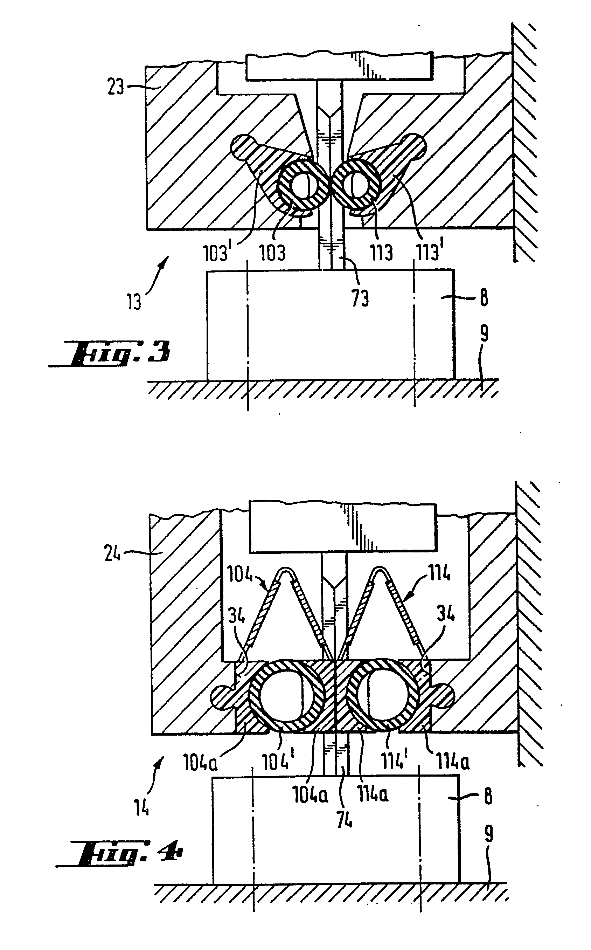

In Figur 3 ist bruchstückhaft eine Meßeinrichtung 13 im Querschnitt dargestellt. Die Standart-Bauelemente sind hier wieder die gleichen, wie bei der schon beschriebenen Meßeinrichtung.

Die Abdeckelemente bestehen hier zum einen aus Stützprofilen 103' und 113', die aus synthetischem Kautschuk bestehen und dauerelastisch sowie formstabil sind. Die eigentlichen Dichtprofile werden von Schläuchen 103, 113 gebildet. Auch diese Schläuche 103 und 113 können mit Luftdruck beaufschlagt werden. Im Zusammenwirken der als Schläuche 103, 113 ausgebildeten Dichtprofile mit den elastischen Stützprofilen 103, 113' ergeben sich besonders gute Dichtungseigenschaften im Bereich des Mitnehmers 73, da sich die hier gezeigten Abdeckelemente 103, 103', 113, 113' besonders gut an den Mitnehmer 73 anschmiegen.

Die Stützprofile 103', 113' sind an ihren freien Enden so geformt, daß sie die Schläuche 103, 113 zum Großteil umschließen. Der Bereich der Umschließung ist größer als 180° und kleiner als 360°, so daß die Schläuche 103, 113 formschlüssig in den Stützprofilen 103', 113' gehalten werden, der Bereich der abdichtenden Berührung hingegen frei liegt. Die Schläuche 103, 113 sind in einfacher Weise auswechselbar.

Auch in Figur 4 ist bruchstückhaft eine Meßeinrichtung 14 im Querschnitt gezeigt, die eine Variante der Lösung gemäß Figur 1 und 2 darstellt.

Im Gehäuse 24 ist ein einseitig offenes Dichtprofil 104, 114 auf jeder Seite eines Längsschlitzes 34 eingezogen. Diese Dichtprofile 104, 114 sind nach Art des Buchstaben «V» geformt und tragen an der der Spitze gegenüberliegenden Seite je ein prismatisches Formteil 104a und 114a. Die Formteile 104a, 114a dienen zur Befestigung der Dichtprofile 104, 114 im Gehäuse 24 und zur Aufnahme der Stützprofile 104' und 114'. Die Formteile 104a und 114a umschließen die Stützprofile 104' und 114' gehäuseseitig und auf der Seite des Längsschlitzes 34, wo sie sich mit Hilfe der Stützprofile 104', 114' in dichtender Berührung befinden. Die Stützprofile 104', 114' sind wiederum aufblasbar und so in ihrer Elastizität einstellbar. Da auch hier die Stützprofile 104', 114' schlauchförmig ausgebildet sind, lassen sie sich auf einfachste Weise austauschen.

Aus den vorstehenden Ausführungsbeispielen ist ersichtlich, daß sich die Erfindung auf vielfältige Weise ausgestalten läßt. So sollen die gezeigten Beispiele auch nicht die Erfindung einschränken, sondern sie lediglich verdeutlichen.

Für die Gehäuse 2, 23, 24 lassen sich in herkömmlicher Weise stranggepreßte Aluminium-Hohlprofile verwenden, bei denen die Aufnahmen für die Abdeckelemente schon durch die Strangpressung mit ausgeformt sind. Zusätzliche Arbeitsgänge zum Herstellen von Befestigungseinrichtungen für die Abdeckelemente können entfallen.

**Patentansprüche**

1. Gekapselte Meßeinrichtung (1), insbesondere Längen- oder Winkelmeßeinrichtung, zur Messung der Lage zweier relativ zueinander beweglicher Objekte (4, 9), deren mit einem der zu messenden Objekte (4) verbundenes Gehäuse (2) an zumindest einer Seite einen in Bewegungsrichtung des beweglichen Objektes (4) verlaufenden Schlitz (3) aufweist, wobei das Gehäuse (2) beiderseits des Schlitzes (3) mehrteilige Abdeckelemente (10 bis 114') trägt, die im Bereich des Schlitzes (3) in abdichtender, stoßender Berührung stehen, durch die örtlich ein mit dem anderen Objekt (9) verbundener Mitnehmer (7) hindurchgreift, der seinerseits mit einer im Gehäuse (2) untergebrachten, als Meßaufnehmer dienenden Baueinheit (6) verbunden ist, und wobei bei den mehrteiligen Abdeckelementen (10) jeweils wenigstens ein Teil als Dichtprofil (10, 11; 103, 113; 104, 114) ausgebildet ist, dadurch gekennzeichnet, daß wenigstens ein anderes Teil als elastisches Stützprofil (10', 11', 103', 113', 104', 114') ausgebildet ist und daß jeweils entweder das Dichtprofil (103, 113) oder das Stützprofil (104', 114') als Schlauch ausgebildet ist.

2. Gekapselte Meßeinrichtung nach Anspruch 1, dadurch gekennzeichnet, daß bei den mehrteiligen Abdeckelementen das elastische Stützprofil als Schlauch ausgebildet ist.

3. Gekapselte Meßeinrichtung nach Anspruch 1, dadurch gekennzeichnet, daß bei den mehrteiligen Abdeckelementen das Dichtprofil als Schlauch ausgebildet ist.

4. Gekapselte Meßeinrichtung nach den Ansprüchen 1 und 2, dadurch gekennzeichnet, daß die jeweiligen Dichtprofile (10, 11; 104, 114) der mehrteiligen Abdeckelemente zwischen den elastischen Stützprofilen (10', 11'; 104', 114') hindurchgeführt sind.

5. Gekapselte Meßeinrichtung nach Anspruch 2, dadurch gekennzeichnet, daß die jeweiligen Dichtprofile (104, 114) die elastischen Stützprofile (104', 114') mehrseitig umschließen.

6. Gekapselte Meßeinrichtung nach Anspruch 3, dadurch gekennzeichnet, daß die abdichtenden Schläuche (103, 113) zwischen den elastischen Stützprofilen (103', 113') angeordnet sind.

7. Gekapselte Meßeinrichtung nach Anspruch 6, dadurch gekennzeichnet, daß die elastischen Stützprofile (103', 113') die abdichtenden Schläuche (103, 113) um mehr als 180° und weniger als 360° umgreifen.

8. Gekapselte Meßeinrichtung nach Anspruch 1, dadurch gekennzeichnet, daß die als Schläuche ausgebildeten Elemente (103, 113; 104', 114') leicht auswechselbar sind.

## Claims

1. Encapsulated measuring device (1), especially length or angle measuring device, for measuring the position of two objects (4, 9) movable relative to one another, of which a housing (2) to be connected to one of the objects to be measured (4) has on at least one side a slit (3) running in the direction of movement of the movable object, wherein the housing (2) carries multi-part cover elements (10 to 114') on both sides of the slit (3) which are in sealing, abutting contact in the region of the slit (3), through which a carrier (7) connected to the other object (9) engages locally, which for its part is connected to a unit (6) fitted in the housing (2), serving a measurement receiver, and wherein in the multi-part sealing elements (10) at least one part each is formed as a sealing section (10, 11; 103, 113; 104, 114), characterized in that at least one other part is formed as an elastic support profile (10', 11', 103', 113', 104', 114') and in that either the sealing profile (103, 113) or the support profile (104', 114') is formed as a hose.

2. Encapsulated measuring device according to claim 1, characterized in that in the multi-part cover elements the elastic support section is formed as a hose.

3. Encapsulated measuring device according to claim 1, characterized in that in the multi-part cover elements the sealing section is formed as a hose.

4. Encapsulated measuring device according to claims 1 and 2, characterized in that each sealing section (10, 11; 104, 114) of the multi-part cover elements is fitted through between the elastic support sections (10', 11'; 104', 114').

5. Encapsulated measuring device according to claim 2, characterized in that the respective sealing sections (104, 114) surround the elastic support sections (104', 114') on plural sides.

6. Encapsulated measuring device according to claim 3, characterized in that the sealing hoses (103, 113) are arranged between the elastic support sections (103', 113').

7. Encapsulated measuring device according to claim 6, characterized in that the elastic support sections (103', 113') embrace the sealing hoses (103, 113) over more than 190° and less than 360°.

8. Encapsulated measuring device according to claim 1, characterized in that the elements (103, 113; 104', 114') formed as hoses are readily interchangeable.

## Revendications

1. Dispositif de mesure blindé (1), en particulier dispositif de mesure de longueurs ou d'angles, pour mesurer la position de deux objets (4, 9) mobiles l'un par rapport à l'autre, dont le boîtier (2), relié à l'un des objets à mesurer (4), comporte, sur au moins un côté, une fente (3) disposée dans le sens du déplacement de l'objet mobile (4), le boîtier (2) portant, des deux côtés de la fente, des éléments de recouvrement (10 à 114) en plusieurs parties qui se touchent de façon étanche dans la zone de la fente (3) et que traverse localement un entraîneur (7) qui est relié à l'autre objet (9) et qui est lui-même raccordé à une unité de construction (6), logée dans le boîtier (2) et servant de capteur de mesure, à chaque fois au moins une partie des éléments de recouvrement en plusieurs parties étant réalisée sous la forme d'un profilé d'étanchéité (10, 11; 103, 113; 104, 114) caractérisé par le fait qu'au moins une autre partie est réalisée sous la forme d'un profilé support élastique (10', 11', 103', 113', 104', 114') et qu'à chaque fois, soit le profilé d'étanchéité (103, 113), soit le profilé support (104', 114'), est réalisé sous la forme d'un tuyau flexible.

2. Dispositif de mesure blindé selon la revendication 1, caractérisé par le fait que, dans les éléments de recouvrement en plusieurs parties, c'est le profilé support élastique qui est réalisé sous la forme d'un tuyau flexible.

3. Dispositif de mesure blindé selon la revendication 1, caractérisé par le fait que, dans les éléments de recouvrement en plusieurs parties, c'est le profilé d'étanchéité qui est réalisé sous la forme d'un tuyau flexible.

4. Dispositif de mesure blindé selon les revendications 1 et 2, caractérisé par le fait que les profilés d'étanchéité (10, 11; 104, 114), à chaque fois considérés, des éléments de recouvrement en plusieurs parties, passent entre les profilés supports élastiques (10', 11'; 104', 114').

5. Dispositif de mesure blindé selon la revendication 2, caractérisé par le fait que les profilés d'étanchéité (104, 114), à chaque fois considérés, entourent sur plusieurs côtés les profilés supports élastiques (104', 114').

6. Dispositif de mesure blindé selon la revendication 3, caractérisé par le fait que les tuyaux flexibles (103, 113), assurant l'étanchéité, sont disposés entre les profilés supports élastiques (103', 113').

7. Dispositif de mesure blindé selon la revendication 6, caractérisé par le fait que les profilés supports élastiques (103', 113') entourent les tuyaux flexibles (103, 113), assurant l'étanchéité, sur plus de 180° et sur au moins de 360°.

8. Dispositif de mesure blindé selon la revendication 1, caractérisé par le fait que les éléments (103, 113; 104', 114') réalisés sous la forme de tuyaux flexibles sont facilement interchangeables.

Fig.1

# Fig.2

23

103' 103 113 113'

73

13

8

9

**Fig. 3**

24

104 114

34 34

104a 104' 114' 114a

104a 114a

74

14

8

9

**Fig. 4**